# EUROPEAN PATENT APPLICATION

(11) **EP 4 701 156 A1**
(43) Date of publication of application: **25.02.2026**
(21) Application number: 24938125.2
(22) Date of filing: 25.09.2024
(51) Int. Cl.: H04L 51/222

(54) **MESSAGE PROCESSING METHOD AND APPARATUS FOR SECURE COMPUTING SYSTEM, AND ELECTRONIC DEVICE AND STORAGE MEDIUM**

(30) Priority: 10.05.2024 CN 202410577402
(71) Applicant: CRSC Research & Design Institute Group Co., Ltd., Beijing 100070 (CN)
(72) Inventor: ZHANG, Yongchao, Beijing 100070 (CN); YU, Qing, Beijing 100070 (CN); WANG, Yimin, Beijing 100070 (CN); TAN, Chao, Beijing 100070 (CN); SUN, Hong, Beijing 100070 (CN); KONG, Lingwen, Beijing 100070 (CN); XIAO, Yiping, Beijing 100070 (CN); DAI, Pengfei, Beijing 100070 (CN)
(74) Representative: Samson & Partner Patentanwälte mbB
(86) International application number: PCT/CN2024/121145
(87) International publication number: WO 2025/232068

(57) **Abstract**

Provided in the present disclosure are a message processing method and apparatus for a safety computing system, an electronic device, and a storage medium. The safety computing system adopts a dual two-out-of-two architecture. A target device belongs to any subsystem of the dual two-out-of-two architecture. The method includes: querying address information of a target service via a location service; accessing a target board based on the address information, and subscribing to the target service provided by the target board; and receiving message data published by the target service. When an address of the target board providing the target service changes, new address information of the target service can be queried via the location service. When the target board is a newly added board, address information of a target service in the newly added board can be queried via the target service. In all the above cases, a logic of the target device does not need to be changed, making the safety computing system easier to expand.

## Description

### TECHNICAL FIELD

The present disclosure relates to the technical field of urban rail transit, and particularly, to a message processing method and apparatus for a safety computing system, an electronic device, and a storage medium.

### BACKGROUND ART

With the development of high-speed railway networks and expressway networks, communication based train control (CBTC) systems have been widely popularized and applied. The train control system not only ensures the safety of urban rail transit operation but also improves operational efficiency. The train control system consists of four parts: central equipment, ground equipment, trackside equipment, and on-board equipment. As the direct control part of a train, on-board ground train control equipment plays an extremely important role in train operation safety.

The on-board ground train control equipment is mainly used to integrate track circuits, balise information, and electric multiple unit parameters, automatically generate a continuous speed control mode curve, and monitor safe operation of the train in real time.

Currently, a safety computer platform of the on-board ground train control equipment subscribes to service messages by directly writing service addresses during board development, resulting in a high degree of coupling between a transmitting end and a receiving end in message subscription. When a new board is added, or an existing board requires additional services, logics in all boards that involve the new board need to be modified, which is not conducive to expansion.

### SUMMARY

The present disclosure provides a message processing method and apparatus for a safety computing system, an electronic device, and a storage medium, to solve the problem of poor expandability of the safety computer platform of the on-board ground train control equipment.

According to a first aspect of the present disclosure, there is provided a message processing method for a safety computing system, where the safety computing system adopts a dual two-out-of-two architecture and is applied to a target device, the target device belongs to any subsystem of the dual two-out-of-two architecture, and the method includes:
querying address information of a target service via a location service;
accessing a target board based on the address information, and subscribing to the target service provided by the target board; and
receiving message data published by the target service.

According to the technical solution in the embodiment of the present disclosure, in any subsystem of the dual two-out-of-two architecture, the location service provides the address information of the target service for the target device, a logic of the target device does not need to be configured with an address of the target service, and the target device can query the address information of the target service via the location service. When an address of the target board providing the target service changes, new address information of the target service can be queried via the location service. When the target board is a newly added board, address information of a target service in the newly added board can be queried via the target service. In all the above cases, the logic of the target device does not need to be changed, making the safety computing system easier to expand.

Optionally, before querying address information of a target service via a location service, the method further includes:
when the target device is connected to the subsystem for the first time, registering, by the target device, one or more locally provided services to the location service.

By adopting the above technical solution, when the target device is connected to the subsystem as the newly added board, the target device registers the local services to the location service, such that the location service records in real time available services in the subsystem and address information of the services, thereby improving the reliability of the location service.

Optionally, the registering, by the target device, one or more locally provided services to the location service includes:
sending, by the target device, a service identifier of a local service and address information of the local service to the location service for registration, such that the location service establishes a correspondence between the service identifier and the address information, and providing address information query based on the service identifier according to the correspondence.

By adopting the above technical solution, during registration, the target device sends the service identifier and the address information of the local service to the location service, which can provide service identifier based address information query for other boards in the subsystem, thereby improving query accuracy.

Optionally, the querying address information of a target service via a location service includes:
determining a service identifier of the target service according to a requirement; and
accessing the location service, and querying the address information of the target service based on the service identifier.

By adopting the above technical solution, the target device accesses the location service and queries the address information of the target service based on the service identifier of the target service, such that the target device does not need to be configured with the accurate address of the target service during development, thereby reducing the coupling between the target device and the target board. When the address of the target board changes, valid address information of the target service can be queried by accessing the location service, such that normal execution of other boards is not affected after replacement of any board in the subsystem, thereby improving stability.

Optionally, the accessing a target board based on the address information, and subscribing to the target service provided by the target board includes:
determining a target service set in the target board based on the address information; and
accessing the target board, and subscribing to each target service in the target service set provided by the target board.

By adopting the above technical solution, the target service set composed of a plurality of target services can be subscribed to at one time based on the address information, thereby improving subscription efficiency.

Optionally, the address information includes one or more of a board-level identifier, a service-level identifier, or a service sub-level identifier.

By adopting the above technical solution, the address information can be divided, and services can be accurately located through multiple levels of identifiers, thereby achieving accurate locating of the target service. Meanwhile, when the service-level identifier is used, services corresponding to all service sub-level identifiers in the service-level identifier can be subscribed to, thereby improving subscription efficiency.

According to a second aspect of the present disclosure, there is provided a message processing apparatus for a safety computing system, characterized in that the safety computing system adopts a dual two-out-of-two architecture and is applied to a target device, the target device belongs to any subsystem of the dual two-out-of-two architecture, and the apparatus includes:
a query module, configured to query address information of a target service via a location service;
a subscription module, configured to access a target board based on the address information, and subscribe to the target service provided by the target board; and
a receiving module, configured to receive message data published by the target service.

According to a third aspect of the present disclosure, there is provided an electronic device, characterized by including:
at least one processor; and
a memory communicatively connected to the at least one processor, where
the memory stores a computer program executable by the at least one processor, and the computer program is executed by the at least one processor to enable the at least one processor to perform the message processing method for a safety computing system according to any one of embodiments.

According to a fourth aspect of the present disclosure, there is provided a safety computing system, including a safety function board, a non-safety function board, and the electronic device according to the third aspect, where the electronic device is a function board or a newly added board connected to the non-safety function board via a bus, and the function board is a bus function board, a circuit control function board, a computing board, a network communication board, a recording board, or a master-standby control board.

Optionally, a location service runs on the non-safety function board; or the safety computing system further includes: a location service board, configured to provide a location service.

By adopting the above technical solution, the board on which the location service is located can be flexibly set, thereby improving usability.

According to a fifth aspect of the present disclosure, there is provided a computer-readable storage medium, storing a computer instruction used to implement, when executed by a processor, the message processing method for a safety computing system according to any one of embodiments of the present disclosure.

It should be understood that the content described in this section is not intended to identify key or essential features of the embodiments of the present disclosure, nor is it intended to limit the scope of the present disclosure. Other features of the present disclosure will become readily understood from the following description.

### BRIEF DESCRIPTION OF THE DRAWINGS

To more clearly illustrate the technical solutions in the embodiments of the present disclosure, the accompanying drawings that need to be used in the description of the embodiments will be briefly introduced below. Apparently, the accompanying drawings in the description below merely illustrate some embodiments of the present disclosure. Those of ordinary skill in the art may also derive other accompanying drawings from these accompanying drawings without creative efforts.
FIG. 1 is a schematic diagram of an architecture of a message processing system for a safety computing system provided in an embodiment of the present disclosure;
FIG. 2 is a schematic flowchart of a message processing method for a safety computing system provided in Embodiment 1 of the present disclosure;
FIG. 3 is a schematic diagram of message subscription provided in Embodiment 1 of the present disclosure;
FIG. 4 is a schematic structural diagram of a message processing apparatus for a safety computing system provided in Embodiment 2 of the present disclosure; and
FIG. 5 is a schematic structural diagram of an electronic device provided in Embodiment 3 of the present disclosure.

### DETAILED DESCRIPTION

To make those skilled in the art better understand the solutions of the present invention, the technical solutions in the embodiments of the present invention are clearly and completely described below with reference to the accompanying drawings in the embodiments of the present invention. Apparently, the described embodiments are merely some rather than all of the embodiments of the present invention. All other embodiments obtained by those of ordinary skill in the art based on the embodiments of the present invention without creative efforts shall fall within the scope of protection of the present invention.

It is to be noted that the terms "first", "second", etc. in the specification and claims of the present invention and the above accompanying drawings are used to distinguish similar objects and are not necessarily used to describe a particular order or sequence. It should be understood that the data used in this way may be interchanged under appropriate circumstances, such that the embodiments of the present invention described herein can be implemented in sequences other than those illustrated or described herein. In addition, the terms "include/comprise", "have/has", and any variation thereof are intended to cover non-exclusive inclusion. For example, processes, methods, systems, products or devices including a series of steps or units are not necessarily limited to clearly listed steps or units, but may include steps or units not clearly listed, or other steps or units inherent to these processes, methods, products or devices.

A safety computer system, also known as a safety computer platform, adopts a dual two-out-of-two structure. Dual two-out-of-two refers to two sets of two-out-of-two subsystems, namely, a subsystem I and a subsystem II. Each subsystem has a two-out-of-two structure internally. The two subsystems operate simultaneously and serve as hot standbys for each other. A hot standby device only performs computation and produces no output. When computed results of the two subsystems are consistent, a non-hot standby device produces an output externally, thereby achieving high safety of the entire system. When a fault is detected in one subsystem, it immediately switches to the other subsystem serving as a standby system, thereby achieving high reliability of the entire system.

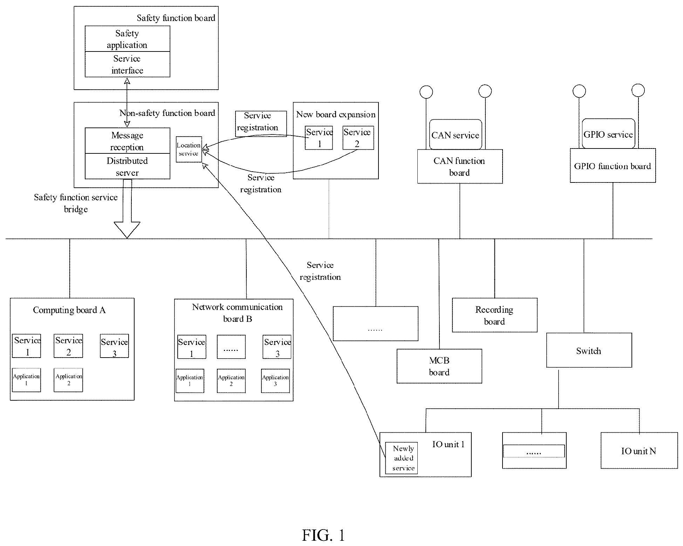

FIG. 1 is a schematic structural diagram of subsystems in a safety computing system provided in an embodiment of the present disclosure, where any subsystem includes a safety board (a main control board), a non-safety board (an auxiliary control board), and some other function boards. The safety board communicates only with the auxiliary control board, and the auxiliary control board serves as a safety board function bridge to communicate with other function boards. The function boards can be freely expanded and communicate with the non-safety board via distributed bus publishing and subscription. The function boards include a computing board, a network communication board, a bus function board (e.g., a CAN function board), a circuit control function board (e.g., a GPIO function board), a master-standby control board (e.g., a MCB board), a recording board, and a switch. The switch accesses a device or a board of an input/output unit via a network.

The safety function board (the main control board) serves as a core of the safety computer platform and is responsible for logic processing operation and communication control. The non-safety board (the auxiliary control board) is configured to perform communication and data preprocessing. The communication of the non-safety board is based on a publish-subscribe mechanism, which allows flexible expansion of new boards. The function boards include other special boards such as a recording board responsible for recording log information for internal communication of a logic unit, a network communication board responsible for interfacing an internal network to external Ethernet data, and a range controlled communication (RCC) board responsible for communication with an on-board radio, a computing board, an MCB board, an IO unit expansion board, etc.

As shown in FIG. 1, as an alternative, a location service is configured in the non-safety function board. The location service is used to store a correspondence between a service identifier and address information, and to provide a function of querying address information of a target service for each function board. As another alternative, a location service board may be independently provided, and a location service is configured therein to provide a function of querying address information of a target service for each function board.

### Embodiment 1

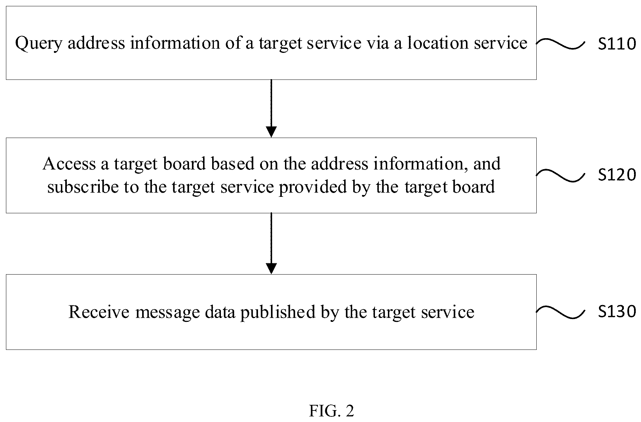

FIG. 2 is a schematic flowchart of a message processing method for a safety computing system provided in Embodiment 1 of the present disclosure. This embodiment may be applicable to a case where a safety computer system adopting a dual two-out-of-two structure is expanded with a new board. The method may be executed by a message processing apparatus for a safety computing system. The message processing apparatus for the safety computing system may be implemented in a hardware and/or software form. The safety computing system adopts a dual two-out-of-two architecture. The method is applied to a target device. The target device belongs to any subsystem of the dual two-out-of-two architecture. As shown in FIG. 2, the method includes the following steps.

In S110, address information of a target service is queried via a location service.

The target device may be a board directly connected to a subsystem bus, or an external device connected to the subsystem via a switch through an input/output unit. The target device is connected to the subsystem in the dual two-out-of-two architecture. When the target device needs to acquire data provided by other boards in the subsystem, the address information of the target service can be queried via the location service. Service data provided by the target service is used for an execution logic of the target device.

The location service can be located on a non-safety function board of the subsystem, such that access to the location service is achieved by accessing a port of the non-safety function board. The location service stores a correspondence between a service identifier and address information of a service. The location service can also maintain a healthy correspondence, such that the correspondence is valid in real time. Based on the correspondence, the location service can provide address information query for the target service to the target device.

Further, before address information of a target service is queried via a location service, the method further includes:
when the target device is connected to the subsystem for the first time, registering, by the target device, one or more locally provided services to the location service.

The first connection of the target device to the subsystem is also referred to as the connection of a new board thereto. After being powered on, the target device queries a location service of an auxiliary control board to check whether its own service already exists. There may be one or more services. If its own service does not exist, the target device registers its own service to the location service, i.e., writes its own address into a corresponding position of the auxiliary control board.

If other boards subscribe to the service of the target device and the target device needs to publish data, the published message data is automatically serialized into a character string, and any board subscribing to the service can deserialize the character string to obtain the corresponding message data.

By adopting the above technical solution, when the target device is connected to the subsystem as the newly added board, the target device registers the local services to the location service, such that the location service records in real time available services in the subsystem and address information of the services, thereby improving the reliability of the location service.

Optionally, the registering, by the target device, one or more locally provided services to the location service may include:
sending, by the target device, a service identifier of a local service and address information of the local service to the location service for registration, such that the location service establishes a correspondence between the service identifier and the address information, and providing address information query based on the service identifier according to the correspondence.

The registration includes the target device storing the address information of the local service at a storage address allocated by the location service, and the location service establishing the correspondence between the address information and the service identifier. The location service maintains the validity of the correspondence in real time. If a service goes down, the location service marks the service in the correspondence or deletes the service from the correspondence, such that the location service can provide valid address information for any board in the subsystem.

By adopting the above technical solution, during registration, the target device sends the service identifier and the address information of the local service to the location service, which can provide service identifier based address information query for other boards in the subsystem, thereby improving query accuracy.

Optionally, the querying address information of a target service via a location service may include:
determining a service identifier of the target service according to a requirement; and accessing the location service, and querying the address information of the target service based on the service identifier.

By adopting the above technical solution, the target device accesses the location service and queries the address information of the target service based on the service identifier of the target service, such that the target device does not need to be configured with the accurate address of the target service during development, thereby reducing the coupling between the target device and the target board. When the address of the target board changes, valid address information of the target service can be queried by accessing the location service, such that normal execution of other boards is not affected after replacement of any board in the subsystem, thereby improving stability.

In S120, a target board is accessed based on the address information, and the target service provided by the target board is subscribed to.

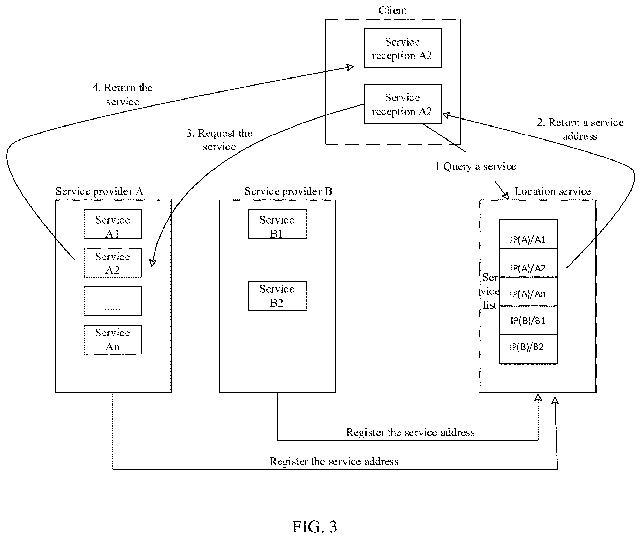

As shown in FIG. 3, the publish-subscribe mechanism mainly includes three roles, namely, a server that provides services, a client that uses services, and a location server that provides resource identification query.

In an embodiment, if the target device needs to subscribe to the service of the target board, the target device is the client, the target board is the server, and the location service is the location server.

In another embodiment, if the target board needs to subscribe to the service of the target device, the target device is the server, the target board is the client, and the location service is the location server.

In a message subscription mechanism, the target device plays different roles during subscription of different message data according to message subscription requirements.

The client requests the desired service identifier from the location server. The location server returns the address information corresponding to the service identifier. The client accesses the server via the address information to perform a data subscription function. Optionally, if the service goes offline due to an exception at this time, the client can reacquire available address information of a relevant service from the location server and connect to a new service based on the address information. The location server continuously detects a health status of all registered services to ensure their availability.

As shown in FIG. 3, it is assumed that the target device is the client, and a target board A acts as the server and provides multiple services A, such as a service A1, a service A2, ..., and a service An. A target board B acts as the server and provides multiple services B, such as a service B1 and a service B2.

When the client needs to acquire the service A2, address information of the service A2 is requested via the location server. Specifically, the client accesses the location server and queries the address information of the service A2 based on a service identifier of the service A2, such as "A2". The location server returns the address information of the service A2 to the client. After acquiring the address information of the service A2, the client accesses the server based on the address information. The server is a target device A. The target device subscribes to message data of the service A2 with the target board A. When the service A2 of the target board A publishes a message, the message data of the service A2 is sent to the client.

Optionally, the accessing a target board based on the address information, and subscribing to the target service provided by the target board may include:
determining a target service set in the target board based on the address information; and accessing the target board, and subscribing to each target service in the target service set provided by the target board.

By adopting the above technical solution, the target service set composed of a plurality of target services can be subscribed to at one time based on the address information, thereby improving subscription efficiency.

The address information includes one or more of a board-level identifier, a service-level identifier, or a service sub-level identifier.

In the embodiment of the present disclosure, a uniform resource locator (URL) can be used as address information to identify resources, such that message data of services can be located via the URL. An actual physical address of the URL can be queried in a resource identification service and a location service.

By way of example, the URL may be "board_name/server/server_id...", where "board_name" is the board-level identifier, "server" is the service-level identifier, and "server_id" is the service sub-level identifier. "..." represents service identifiers belonging to sub-services under the service sub-level identifier.

By adopting the above technical solution, the address information can be divided, and services can be accurately located through multiple levels of identifiers, thereby achieving accurate locating of the target service. Meanwhile, when the service-level identifier is used, services corresponding to all service sub-level identifiers in the service-level identifier can be subscribed to, thereby improving subscription efficiency.

In S130, message data published by the target service is received.

According to the technical solution in the embodiment of the present disclosure, in any subsystem of the dual two-out-of-two architecture, the location service provides the address information of the target service for the target device, a logic of the target device does not need to be configured with an address of the target service, and the target device can query the address information of the target service via the location service. When an address of the target board providing the target service changes, new address information of the target service can be queried via the location service. When the target board is a newly added board, address information of a target service in the newly added board can be queried via the target service. In all the above cases, the logic of the target device does not need to be changed, making the safety computing system easier to expand.

### Embodiment 2

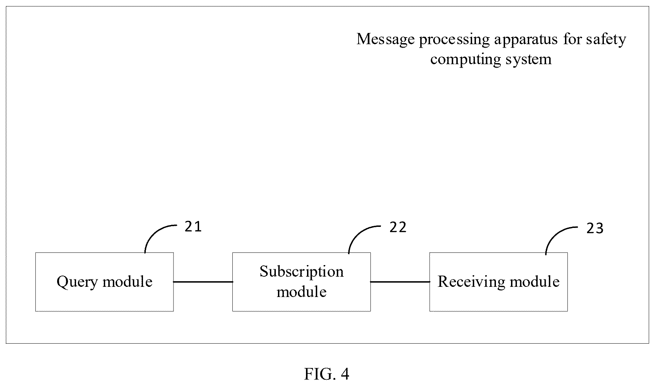

FIG. 4 is a schematic structural diagram of a message processing apparatus for a safety computing system provided in Embodiment 2 of the present disclosure. As shown in FIG. 4, the safety computing system adopts a dual two-out-of-two architecture and is applied to a target device, the target device belongs to any subsystem of the dual two-out-of-two architecture, and the apparatus includes:
a query module 21, configured to query address information of a target service via a location service;
a subscription module 22, configured to access a target board based on the address information, and subscribe to the target service provided by the target board; and
a receiving module 23, configured to receive message data published by the target service.

According to the technical solution in the embodiment of the present disclosure, in any subsystem of the dual two-out-of-two architecture, the location service provides the address information of the target service for the target device, a logic of the target device does not need to be configured with an address of the target service, and the target device can query the address information of the target service via the location service. When an address of the target board providing the target service changes, new address information of the target service can be queried via the location service. When the target board is a newly added board, address information of a target service in the newly added board can be queried via the target service. In all the above cases, the logic of the target device does not need to be changed, making the safety computing system easier to expand.

On the basis of the above embodiment, optionally, a registration module is further included, which is configured to register, by the target device when the target device is connected to the subsystem for the first time, one or more locally provided services to the location service.

By adopting the above technical solution, when the target device is connected to the subsystem as the newly added board, the target device registers the local services to the location service, such that the location service records in real time available services in the subsystem and address information of the services, thereby improving the reliability of the location service.

On the basis of the above embodiment, optionally, the registration module is configured to:
send, by the target device, a service identifier of a local service and address information of the local service to the location service for registration, such that the location service establishes a correspondence between the service identifier and the address information, and provide address information query based on the service identifier according to the correspondence.

By adopting the above technical solution, during registration, the target device sends the service identifier and the address information of the local service to the location service, which can provide service identifier based address information query for other boards in the subsystem, thereby improving query accuracy.

On the basis of the above embodiment, optionally, the query module 21 is configured to:
determine a service identifier of the target service according to a requirement; and
access the location service, and query the address information of the target service based on the service identifier.

By adopting the above technical solution, the target device accesses the location service and queries the address information of the target service based on the service identifier of the target service, such that the target device does not need to be configured with the accurate address of the target service during development, thereby reducing the coupling between the target device and the target board. When the address of the target board changes, valid address information of the target service can be queried by accessing the location service, such that normal execution of other boards is not affected after replacement of any board in the subsystem, thereby improving stability.

On the basis of the above embodiment, optionally, the subscription module 22 is configured to:
determine a target service set in the target board based on the address information; and
access the target board, and subscribe to each target service in the target service set provided by the target board.

By adopting the above technical solution, the target service set composed of a plurality of target services can be subscribed to at one time based on the address information, thereby improving subscription efficiency.

On the basis of the above embodiment, optionally, the address information includes one or more of a board-level identifier, a service-level identifier, or a service sub-level identifier.

By adopting the above technical solution, the address information can be divided, and services can be accurately located through multiple levels of identifiers, thereby achieving accurate locating of the target service. Meanwhile, when the service-level identifier is used, services corresponding to all service sub-level identifiers in the service-level identifier can be subscribed to, thereby improving subscription efficiency.

The message processing apparatus for a safety computing system provided in the embodiment of the present disclosure can execute the message processing method for a safety computing system provided in any embodiment of the present disclosure, and has corresponding functional modules for executing the method and corresponding beneficial effects.

### Embodiment 3

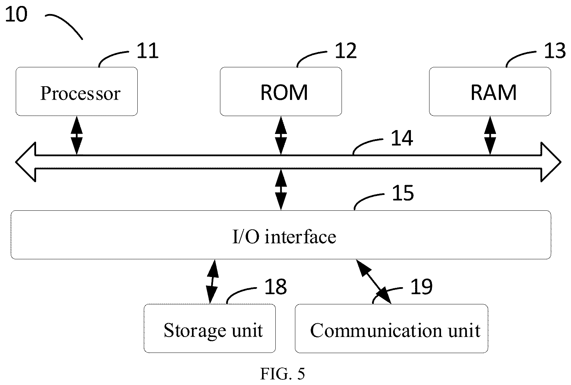

FIG. 5 is a schematic structural diagram of an electronic device provided in Embodiment 3 of the present disclosure. The electronic device 10 is intended to represent various forms of field programmable gate arrays. The components shown herein, their connections and relationships, and their functions are merely exemplary and are not intended to limit the implementation of the present disclosure described and/or claimed herein.

As shown in FIG. 5, the electronic device 10 includes at least one processor 11 and a memory communicatively connected to the at least one processor 11, such as a read-only memory (ROM) 12 and a random access memory (RAM) 13, where the memory stores a computer program executable by the at least one processor, and the processor 11 can perform various proper actions and processes based on a computer program stored in the ROM 12 or a computer program loaded from a storage unit 18 to the RAM 13. Various programs and data necessary for operation of the electronic device 10 can also be stored in the RAM 13. The processor 11, the ROM 12, and the RAM 13 are connected to each other via a bus 14. An input/output (I/O) interface 15 is also connected to the bus 14.

A plurality of components in the electronic device 10 are connected to the I/O interface 15, and includes: a storage unit 18, such as a magnetic disk and a compact disc; and a communication unit 19, such as a network card, a modem, and a wireless communication transceiver. The communication unit 19 allows the electronic device 10 to exchange information/data with other devices through a computer network such as the Internet and/or various telecommunication networks.

The processor 11 may be any general-purpose and/or special-purpose processing component with processing and computing capabilities. Some examples of the processor 11 include, but are not limited to, a central processing unit (CPU), a graphics processing unit (GPU), various dedicated artificial intelligence (AI) computing chips, various processors running machine learning model algorithms, a digital signal processor (DSP), and any appropriate processor, controller, microcontroller, etc. The processor 11 performs each of the methods and processes described above, such as the message processing method for a safety computing system.

In some embodiments, the message processing method for a safety computing system may be implemented as a computer program that is tangibly contained in a computer-readable storage medium, such as a storage unit 18. In some embodiments, a part or all of the computer program may be loaded and/or installed onto the electronic device 10 through the ROM 12 and/or the communication unit 19. When the computer program is loaded into the RAM 13 and executed by the processor 11, one or more of the steps of the message processing method for a safety computing system described above can be performed. Alternatively, in other embodiments, the processor 11 may be configured to perform the message processing method for a safety computing system in any other proper manner (for example, with the help of firmware).

Various embodiments of the system and technology described above herein may be implemented in a digital electronic circuit system, an integrated circuit system, a field programmable gate array (FPGA), an application-specific integrated circuit (ASIC), an application-specific standard product (ASSP), a system on chip (SOC), a complex programmable logic device (CPLD), computer hardware, firmware, software, and/or a combination thereof. These various embodiments may be implemented in one or more computer programs. The one or more computer programs may be executed and/or interpreted on a programmable system including at least one programmable processor. The programmable processor may be a dedicated or general-purpose programmable processor, and may receive data and instructions from a storage system, at least one input device, and at least one output device, and transmit the data and the instructions to the storage system, the at least one input device, and the at least one output device.

The computer programs for implementing the message processing method for a safety computing system in the present disclosure may be written in any combination of one or more programming languages. These computer programs may be provided to a processor of a general-purpose computer, a special-purpose computer, or another programmable data processing device, such that the computer programs, when executed by the processor, implement the functions/operations specified in a flowchart and/or a block diagram. The computer program may be completely or partially executed on a machine, partially executed on the machine as an independent software package and partially executed on a remote machine or completely executed on the remote machine or a server.

### Embodiment 4

Embodiment 4 of the present disclosure provides a message processing system for a safety computing system, including a safety function board, a non-safety function board, and the electronic device according to Embodiment 3, where the electronic device is a function board or a newly added board connected to the non-safety function board via a bus, and the function board is a bus function board, a circuit control function board, a computing board, a network communication board, a recording board, or a master-standby control board.

The message processing method for a safety computing system provided in the above embodiment may be applied to any function board or newly added board connected to the subsystem bus, where the function board or the newly added board is an electronic device that runs the message processing method for a safety computing system provided in the above embodiment. The function board may be any one of a bus function board, a circuit control function board, a computing board, a network communication board, a recording board, or a master-standby control board. The bus function board may be a CAN function board for providing CAN services. The circuit control function board may be a GPIO function board for providing GPIO services. The master-standby control board may be an MCB board for master-standby control of different subsystems.

On the basis of the above embodiment, optionally, a location service runs on the non-safety function board; or the safety computing system further includes: a location service board, configured to provide a location service.

The location service involved in the message processing method for a safety computing system may be configured on the non-safety function board, or the location service may be provided through an independent location service board. If the location service is provided through the independent location service board, the location service board is connected to the subsystem bus.

### Embodiment 5

Embodiment 5 of the present disclosure further provides a computer-readable storage medium, storing a computer instruction which may be used to cause a processor to perform a message processing method for a safety computing system, where the safety computing system adopts a dual two-out-of-two architecture, the method is applied to a target device, the target device belongs to any subsystem of the dual two-out-of-two architecture, and the method includes:
querying address information of a target service via a location service;
accessing a target board based on the address information, and subscribing to the target service provided by the target board; and
receiving message data published by the target service.

On the basis of the above embodiment, optionally, before querying address information of a target service via a location service, the method further includes:
when the target device is connected to the subsystem for the first time, registering, by the target device, one or more locally provided services to the location service.

On the basis of the above embodiment, optionally, the registering, by the target device, one or more locally provided services to the location service includes:
sending, by the target device, a service identifier of a local service and address information of the local service to the location service for registration, such that the location service establishes a correspondence between the service identifier and the address information, and providing address information query based on the service identifier according to the correspondence.

On the basis of the above embodiment, optionally, the querying address information of a target service via a location service includes:
determining a service identifier of the target service according to a requirement; and
accessing the location service, and querying the address information of the target service based on the service identifier.

On the basis of the above embodiment, optionally, the accessing a target board based on the address information, and subscribing to the target service provided by the target board includes:
determining a target service set in the target board based on the address information; and
accessing the target board, and subscribing to each target service in the target service set provided by the target board.

On the basis of the above embodiment, optionally, the address information includes one or more of a board-level identifier, a service-level identifier, or a service sub-level identifier.

In the context of the present disclosure, the computer-readable storage medium may be a tangible medium that may contain or store a computer program for use by or in combination with an instruction executing system, apparatus or device. The computer-readable storage medium may include, but is not limited to, an electronic, magnetic, optical, electromagnetic, infrared, or semiconductor system, apparatus or device, or any suitable combination thereof. Alternatively, the computer-readable storage medium may be a machine-readable signal medium. A more specific example of the machine-readable storage medium includes an electrical connection based on one or more wires, a portable computer disk, a hard disk, a random access memory (RAM), a read-only memory (ROM), an erasable programmable read-only memory (EPROM or flash memory), an optical fiber, a compact disk read-only memory (CD-ROM), an optical storage device, a magnetic storage device, or any suitable combination thereof.

To provide interaction with a user, the system and technology described herein may be implemented on the electronic device including: a display device for displaying information to the user (for example, a cathode ray tube (CRT) or liquid crystal display (LCD) monitor); and a keyboard and a pointing device (for example, a mouse or a trackball), through which the user can provide input to the electronic device. Other types of devices may also be used to provide interaction with the user. For example, feedback provided to the user may be any form of sensory feedback (for example, visual feedback, auditory feedback, or tactile feedback); and input from the user may be received in any form (including acoustic input, speech input, or tactile input).

The system and technology described herein may be implemented in a computing system including a back-end component (for example, a data server), a computing system including a middleware component (for example, an application server), a computing system including a front-end component (for example, a user computer having a graphical user interface or a web browser through which the user can interact with the embodiment of the system and technology described herein), or a computing system including any combination of such back-end component, middleware component, or front-end component. The components of the system may be connected to each other through digital data communication (for example, a communication network) in any form or medium. Examples of the communication network include: a local area network (LAN), a wide area network (WAN), a blockchain network, and the Internet.

The computing system may include a client and a server. The client and the server are generally far away from each other and usually interact through the communication network. The relationship between the client and the server is produced by computer programs running on the respective computers and having a client-server relationship. The server may be a cloud server, also referred to as a cloud computing server or a cloud host, which is a host product in a cloud computing service system. In this way, the defects of high management difficulty and poor business scalability in conventional physical hosts and VPS services are overcome.

It should be understood that the various forms of processes described above may be used to reorder, add or delete steps. For example, the steps described in the present disclosure may be performed in parallel, sequentially, or in a different order, and there is no limitation herein as long as the desired results of the technical solution in the present disclosure can be achieved.

The above specific embodiments do not constitute a limitation on the scope of protection of the present disclosure. It should be understood by those skilled in the art that various modifications, combinations, sub-combinations, and substitutions may be made according to design requirements and other factors. Any modifications, equivalent substitutions, improvements, etc. made within the spirit and principle of the present disclosure shall all be included within the scope of protection of the present disclosure.

## Claims

1. A message processing method for a safety computing system, **characterized in that** the safety computing system adopts a dual two-out-of-two architecture and is applied to a target device, the target device belongs to any subsystem of the dual two-out-of-two architecture, and the method comprises:
querying address information of a target service via a location service;
accessing a target board based on the address information, and subscribing to the target service provided by the target board; and
receiving message data published by the target service.

2. The method according to claim 1, **characterized in that** before querying address information of a target service via a location service, the method further comprises:
when the target device is connected to the subsystem for the first time, registering, by the target device, one or more locally provided services to the location service.

3. The method according to claim 2, **characterized in that** the registering, by the target device, one or more locally provided services to the location service comprises:
sending, by the target device, a service identifier of a local service and address information of the local service to the location service for registration, such that the location service establishes a correspondence between the service identifier and the address information, and providing address information query based on the service identifier according to the correspondence.

4. The method according to claim 3, **characterized in that** the querying address information of a target service via a location service comprises:
determining a service identifier of the target service according to a requirement; and
accessing the location service, and querying the address information of the target service based on the service identifier.

5. The method according to claim 1, **characterized in that** the accessing a target board based on the address information, and subscribing to the target service provided by the target board comprises:
determining a target service set in the target board based on the address information; and
accessing the target board, and subscribing to each target service in the target service set provided by the target board.

6. The method according to claim 1, **characterized in that** the address information comprises one or more of a board-level identifier, a service-level identifier, or a service sub-level identifier.

7. A message processing apparatus for a safety computing system, **characterized in that** the safety computing system adopts a dual two-out-of-two architecture and is applied to a target device, the target device belongs to any subsystem of the dual two-out-of-two architecture, and the apparatus comprises:
a query module, configured to query address information of a target service via a location service;
a subscription module, configured to access a target board based on the address information, and subscribe to the target service provided by the target board; and
a receiving module, configured to receive message data published by the target service.

8. An electronic device, **characterized by** comprising:
at least one processor; and
a memory communicatively connected to the at least one processor, wherein
the memory stores a computer program executable by the at least one processor, and the computer program is executed by the at least one processor to enable the at least one processor to perform the message processing method for a safety computing system according to any one of claims 1 to 6.

9. A safety computing system, **characterized by** comprising a safety function board, a non-safety function board, and the electronic device according to claim 8, wherein the electronic device is a function board or a newly added board connected to the non-safety function board via a bus, and the function board is a bus function board, a circuit control function board, a computing board, a network communication board, a recording board, or a master-standby control board.

10. The safety computing system according to claim 9, **characterized in that** a location service runs on the non-safety function board; or
the safety computing system further comprises: a location service board, configured to provide a location service.

11. A computer-readable storage medium, **characterized by** storing a computer instruction used to implement, when executed by a processor, the message processing method for a safety computing system according to any one of claims 1 to 7.
